# FASCICULE DE BREVET EUROPEEN

(11) **EP 0 724 134 B1**
(45) Date de publication et mention de la délivrance du brevet: **07.07.1999**
(21) Numéro de dépôt: 95810052.1
(22) Date de dépôt: 30.01.1995
(51) Int. Cl.: G01B 5/00, G01B 5/02

(54) **Dispositif de mesure de longueur et méthode d'ajustage dudit dispositif**
Vorrichtung zur Längemessung und Verfahren zur Einstellung der genannten Vorrichtung
Length measuring device and method for adjusting the device

(43) Date de publication de la demande: 31.07.1996
(73) Titulaire: Brown & Sharpe Tesa S.A., 1020 Renens (CH)
(72) Inventeur: Zanier, Adriano, CH-1008 Prilly/VD (CH); Bezinge, Alex, CH-1137 Yens/VD (CH)
(74) Mandataire: BOVARD AG - Patentanwälte

(56) Documents cités:
- EP-A- 0 579 961
- DE-A- 3 508 143
- FR-A- 2 050 419
- GB-A- 1 352 707
- US-A- 5 172 485
- PATENT ABSTRACTS OF JAPAN vol. 7 no. 125 (P-200) [1270] ,31 Mai 1983 & JP-A-58 041302 (SUMITOMO KINZOKU KOGYO K.K.) 10 Mars 1983,

## Description

La présente invention a pour objet un dispositif de mesure de grandeurs et une méthode d'ajustage dudit dispositif. Plus précisément, cette invention a pour objet un dispositif de mesure électronique de longueur comprenant une règle fixée sur un bâti le long duquel peut coulisser un coulisseau, ainsi que des moyens de détection comprenant un capteur placé en regard de la règle et permettant en collaboration avec elle de déterminer au moins une coordonnée d'un point lié au coulisseau dans un système de coordonnées lié au bâti.

De tels dispositifs sont utilisés par exemple dans les ateliers de fabrication mécanique pour la mesure et le contrôle des dimensions des pièces. Le brevet EP0579961 (TESA), paru le 26.1.1994, décrit des dispositifs de mesure de grandeurs de ce type.

Ils comprennent généralement une règle fixée à un bâti le long duquel peut coulisser un coulisseau. une tête de mesure associée au coulisseau et un capteur associé au coulisseau. La pièce à mesurer est généralement immobilisée et la tête de mesure est amenée par déplacement du coulisseau en contact avec certains points de la pièce. Le capteur permet en collaboration avec la règle de fournir une ou plusieurs coordonnées de la tête de mesure dans un système de coordonnées généralement lié au bâti. Dans le cas d'un bâti vertical, on peut ainsi déterminer la hauteur de divers points de la pièce et, par soustraction de mesures successives, des diamètres d'alésage par exemple. Une unité de traitement informatique des données peut être reliée au dispositif pour traiter, afficher et mémoriser les données. Selon le type de dispositif, le bâti et la coulisse peuvent aussi être horizontaux pour effectuer des mesures de longueur. On connaît aussi des dispositifs à plusieurs axes, comportant plusieurs coulisses, pour effectuer des mesures multidimensionnelles.

La lecture de la dimension à mesurer se fait dans le dispositif du brevet susmentionné à l'aide de moyens électro-optiques. Plus précisément, la règle 57 fixée au bâti est une règle en verre à divisions contrastées, et le capteur est un capteur de type électro-optique fournissant un signal dépendant du nombre de divisions mises en regard du capteur.

On connaît également d'autres procédés de lecture avec des moyens de type capacitif. Dans ces procédés, la règle comporte une rangée d'électrodes de largeur déterminée, et le capteur comporte une seconde rangée d'électrodes, de largeur généralement inférieure ou égale. La capacité résultante entre ces deux réseaux d'électrodes dépend de leur recouvrement et donc de leur position respective, ce qui permet de déterminer la position de la tête de mesure. Le brevet US4878013 (Andermo) par exemple décrit de tels dispositifs.

Dans le dispositif du brevet EP0579961 susmentionné, le capteur 58 est simplement vissé sur le coulisseau 4 en regard de la règle graduée 57. Le parallélisme et la distance entre le capteur et la règle, dont dépendent fortement la précision de mesure, sont donc fonction uniquement de la précision de fabrication de l'ensemble règle-bâti-coulisse-coulisseau-capteur. Des tolérances de fabrication strictes doivent donc être appliquées à chacun de ces éléments, ce qui renchérit considérablement le coût du dispositif. En outre, il est très difficile de corriger des défauts de parallélisme apparus après la fabrication, par exemple suite à des chocs, des dilatations ou des déformations.

On connaît des systèmes de réglage de la distance règle-capteur au moyen de cales ou de rondelles intercalées entre le capteur et le coulisseau. Lors de la fabrication, on procède au réglage du parallélisme et de la distance en intercalant successivement des cales ou des rondelles d'épaisseur croissante en différents endroits entre le capteur et le coulisseau, jusqu'à ce que l'on obtienne un parallélisme jugé suffisant. Outre le fait que ce réglage s'avère long et fastidieux, sa précision est limitée par le nombre de cales ou de rondelles d'épaisseur différentes à disposition. Ce système ne convient donc pas à des dispositifs devant offrir une précision de mesure inférieure à 0,01 millimètres, et une correction du parallélisme après la fabrication n'est possible qu'en démontant tout le capteur et en remplaçant tout ou partie des cales ou des rondelles par des cales ou des rondelles d'épaisseur différente, pour autant qu'on en ait à disposition. En outre, ces systèmes permettent seulement de régler le parallélisme et la distance entre le capteur et la règle avec le coulisseau à une position donnée. Pour garantir que ce parallélisme et cette distance seront maintenus pour n'importe quelle position du coulisseau, il est nécessaire de procéder à un usinage méticuleux et coûteux du bâti.

Un but de l'invention est donc de proposer un dispositif de mesure du type précité, dans lequel la distance et le parallélisme entre le capteur et la règle peuvent être ajustés très simplement, cela même après la fabrication.

Un autre but est de proposer un dispositif de mesure du type précité, dans lequel la distance et le parallélisme peuvent être ajustés de manière précise, compatibles avec des résolutions de mesure de l'ordre de 0,001 millimètre.

Un autre but est de proposer un dispositif de mesure du type précité, dans lequel un déplacement parallèle du capteur face à la règle est garanti au moyen d'un usinage simplifié du bâti.

Un autre but de l'invention est de proposer une méthode de réglage de la distance et du parallélisme du capteur et de la règle d'un dispositif de mesure du type précité.

Pour cela, selon une première caractéristique de l'invention, le dispositif de mesure de longueur comprend:
- un bâti,
- une règle fixée sur le bâti,
- un coulisseau pouvant coulisser le long de ladite règle,
- des moyens de détection comprenant un capteur placé en regard de la règle et permettant en collaboration avec elle de déterminer au moins une coordonnée d'un point lié au coulisseau dans un système de coordonnées lié au bâti,
- des moyens d'assemblage, pour fixer en au moins trois points les moyens de détection au coulisseau, comprenant en au moins un desdits points une vis ou une pièce filetée équivalente engagée dans une ouverture au moins partiellement filetée et au moins un ressort
en sorte qu'une action en chacun desdits points sur la vis permet de modifier l'écartement entre les moyens de détection et le coulisseau, le ressort maintenant cet écartement aussi grand que l'engagement de la vis dans ladite ouverture le permet, de manière à pouvoir ajuster le parallélisme et/ou la distance entre le capteur et la règle.

Selon une autre caractéristique de l'invention, les moyens de détection comprennent un support de capteur comprenant une embase à laquelle est fixé le capteur, et au moins un empattement permettant la fixation au coulisseau, ladite embase étant logée dans une ouverture au travers du coulisseau, le ou lesdits empattements s'étendant hors de l'ouverture en surplomb du coulisseau, à une distance réglable à l'aide desdits moyens d'assemblage.

Selon une autre caractéristique de l'invention, les moyens d'assemblage en au moins un desdits points comprennent en outre une colonnette percée en son centre par ladite ouverture filetée sur au moins une partie de sa longueur, l'ensemble vis-colonnette étant entouré par le ressort, ledit ensemble vis-colonnette traversant le coulisseau et les moyens de détection, de manière à ce qu'il soit possible en agissant sur ladite vis de modifier l'écartement entre le coulisseau et la partie des moyens de détection traversée par ledit ensemble.

Selon une autre caractéristique de l'invention, le parallélisme et/ou de la distance peuvent être ajustés au moyen des opérations suivantes:
- introduction d'au moins un élément permettant d'effectuer une comparaison de la distance entre la règle et les moyens de détection avec une ou des distances étalonnées
- réglage au moyen desdites vis du positionnement et de l'orientation des moyens de détection, jusqu'à ce que la distance en chacun desdits points corresponde à la distance étalonnée, un
ressort étant prévu en chacun desdits points pour maintenir le positionnement des moyens de détection après le réglage.

D'autres caractéristiques et avantages de l'invention ressortiront des revendications et de la description illustrée par les figures annexées, dans lesquelles:
- La figure 1 montre une première vue du dispositif.
- La figure 2 montre une coupe transversale du dispositif.
- La figure 3 montre une coupe longitudinale du dispositif, au milieu de la règle.
- La figure 4 montre un des moyens d'assemblage des moyens de détection au coulisseau.

La description qui suit se rapporte au cas particulier du dispositif de mesure à un seul axe vertical, du type décrit dans le brevet susmentionné EP0579961. Il est évident que l'invention est sans difficulté adaptable à des dispositifs de mesure à un ou plusieurs axes d'orientation quelconque.

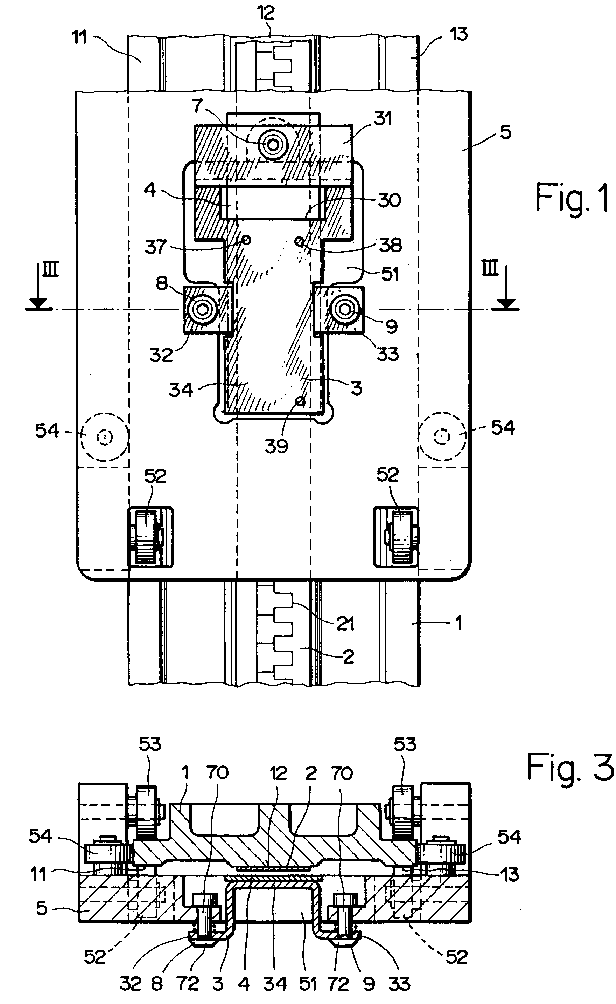

La figure 1 montre une partie du bâti 1 et du coulisseau 5 coulissant sur ce bâti. Dans cet exemple, le bâti, monopièce, est vertical et peut être fixé à une semelle d'appui non représentée, qui peut elle-même de manière connue soit être fixée au sol, soit être déplaçable par glissement, éventuellement sur coussin d'air. Le coulisseau 5, dont seuls les éléments nécessaires à la compréhension de l'invention sont représentés ici, peut se déplacer le long du bâti 1 grâce à des moyens d'entraînement non représentés. Ces moyens d'entraînement peuvent être soit de type manuel, soit motorisés. Le coulisseau peut aussi suivant la réalisation être actionné directement avec la main. Typiquement, la course du coulisseau est à titre d'exemple comprise entre 300 mm et 1500 mm, mais l'invention s'applique aussi à des bâtis plus grands ou plus petits. La précision souhaitée pour un tel dispositif est de l'ordre de grandeur de 0,001 mm jusqu'à 0,01 mm environ, suivant le procédé de lecture utilisé.

Une tête de mesure comprenant une touche de palpage, non représentées, est fixée sur le coulisseau 5. Cette touche de palpage est mise en contact lors d'une opération de mesure avec une partie de la pièce à mesurer. Des moyens d'affichage et/ou d'impression, non représentés, indiquent alors la coordonnée de la touche de palpage dans un système de coordonnées généralement lié au bâti. Un traitement informatique des données peut être effectué déjà à ce niveau, par exemple pour mémoriser, comparer ou soustraire des données de mesure consécutives. Une liaison avec un ordinateur externe de traitement des données de mesure peut en outre être prévue, par exemple une liaison sérielle de type RS232.

La mesure de la coordonnée se fait au moyen d'une règle de mesure 2 fixée au bâti et munie d'électrodes 21, ainsi que de moyens de détection 3, 4 comprenant un capteur 4 constitué par un circuit imprimé et un support de capteur 3. Le capteur 4 est fixé, dans cet exemple au moyen de vis 37, 38, 39, au support de capteur 3, lui-même lié au coulisseau par des moyens d'assemblage que l'on verra plus loin. La mesure se fait dans cet exemple de réalisation avec des moyens de type capacitif, en déterminant la capacité résultante entre les électrodes 21 de la règle 2 et d'autres électrodes, non représentées, du capteur 4. Dans une variante, la lecture se fait avec des moyens électro-optiques. La règle est alors munie de graduations et le capteur est un dispositif de lecture optique de ces graduations. Dans une seconde variante, la lecture se fait avec des moyens de type magnétique. L'invention est aussi applicable à tout autre type de moyens de mesure mettant en oeuvre un capteur se déplaçant à faible distance en regard d'une règle liée à un bâti.

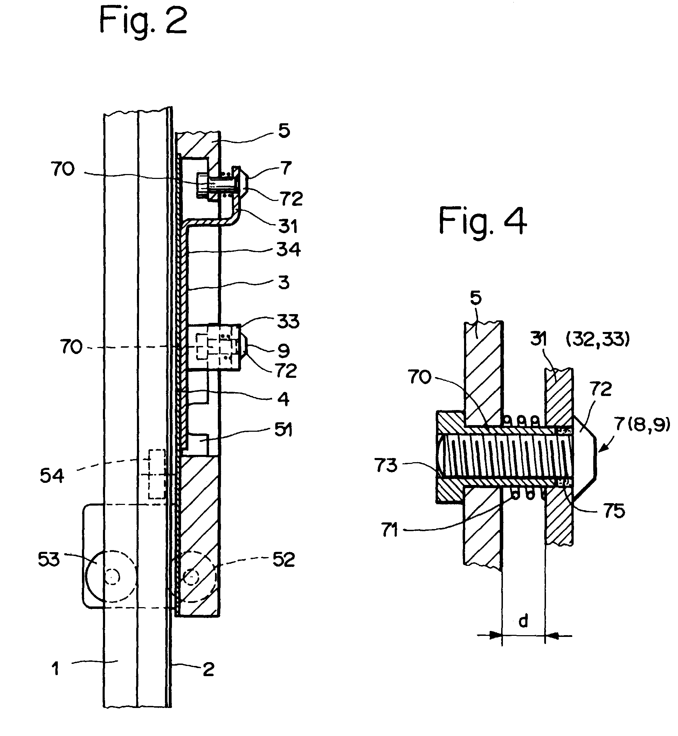

Le coulisseau 5 peut coulisser le long du bâti 1 au moyen de galets supérieurs 52, inférieurs 53 et latéraux 54 (visibles sur les figures 2 et 3). Ces galets enserrent le bâti sur plusieurs faces, comme on le voit particulièrement sur la figure 3. Les galets peuvent par exemple être répartis par groupe de 3 à chaque angle du coulisseau. Le coulisseau coulisse parallèlement à la règle, sans jeu, dans la direction de mesure.

Selon une caractéristique de l'invention, les galets supérieurs 52 roulent sur des surfaces de guidage 11, 13 du bâti monopièce placées sur un même plan que la surface 12 du bâti à laquelle est fixée la règle. Les trois surfaces 11, 12, 13 définissant un seul plan, considéré comme le plan de référence du bâti, elles peuvent être usinées simultanément avec des méthodes d'usinage simples et économiques, par exemple par une seule opération de rectifiage, garantissant une planéité très exacte sur toute la longueur du bâti. De cette manière, on peut assurer un coulissement rigoureusement parallèle du coulisseau sur toute sa course le long du bâti, sans devoir recourir à des opérations d'usinage complexes et onéreuses.

Le coulisseau 5 est muni d'une ouverture 51, dans laquelle sont logés face à la règle 2 les moyens de détection 3, 4, c'est-à-dire le support de capteur 3 et le capteur 4. Le support de capteur est fixé en au moins trois points au coulisseau, par des moyens d'assemblage 7, 8, 9 que l'on étudiera plus loin en relation avec la figure 4. Comme le coulisseau a une certaine épaisseur, le support de capteur est de préférence formé d'une embase plane 34 surmontée d'empattements 31, 32, 33 qui permettent la fixation au coulisseau. Dans l'exemple illustré, il y a autant d'empattements que de moyens d'assemblage, mais il pourrait aussi y avoir moins d'empattements que de moyens d'assemblage. L'embase 34 est logée au fond de l'ouverture 51, alors que les empattements 31, 32, 33 s'étendent hors de l'ouverture 51 en surplomb du coulisseau, à une distance réglable comme on le verra plus loin. Le capteur est fixé solidairement à l'embase 34, en regard de la règle, par n'importe quels moyens de fixation, par exemple par des vis 37, 38, 39. Au moins une ouverture 30 peut être prévue dans l'embase 34 du support, pour accéder sans le démonter à certains composants sur le capteur.

La figure 4 illustre un exemple préférentiel de réalisation des moyens d'assemblage 7, 8, 9 du support de capteur 3 au coulisseau 5. Selon une caractéristique de l'invention, ces moyens d'assemblage permettent de modifier l'écartement d entre les empattements 31, 32, 33 et le coulisseau 5, de manière à adapter le positionnement et l'orientation des moyens de détection 3, 4, et donc d'ajuster le parallélisme et/ou la distance entre le capteur 4 et la règle 2.

Les moyens de détection sont liés au coulisseau 5 au niveau de chaque empattement du support de capteur par des moyens d'assemblage 7, 8, 9 comprenant une colonnette 70 percée en son centre d'une ouverture 73 filetée sur au moins une partie de sa longueur et dans laquelle vient s'engager une vis 72. Un ressort 71 entoure chaque colonnette. Il va de soi que la vis pourrait être remplacée par n'importe quel autre type de pièce filetée équivalente pouvant se visser dans la colonnette.

L'ensemble formé par chaque colonnette 70 et par les vis correspondantes 72 traverse à la fois le support de capteur 3 et le coulisseau 5. Les ressorts 71 maintiennent ces deux éléments écartés, de sorte que les empattements du support de capteur 3 sont en appui contre les têtes de vis 72 et que le coulisseau 5 est en appui contre les têtes des colonnettes 70. L'action des ressorts est donc de maintenir un écartement d entre les empattements 31, 32, 33 et le coulisseau 5 aussi grand que l'engagement des vis 72 dans les colonnettes 70 le permet, et de maintenir le positionnement des moyens de détection 3,4 après le réglage. Les ressorts sont de préférence des ressorts de type spirale et ont une force suffisante pour garantir un maintien stable des moyens de détection, notamment au cours du coulissement du coulisseau. Dans une variante, les ressorts sont de type O-ring.

Une action de vissage ou de dévissage des vis 72 permet de modifier la distance entre les têtes de vis et les têtes de colonnettes, et donc de réduire ou d'augmenter la distance d entre le coulisseau et les empattements 31, 32, 33 du support de capteur. Avec trois points d'assemblage ou plus, on peut ainsi régler avec précision le plan défini par l'embase 34 du support de capteur, et donc le plan défini par le capteur lui-même. Grâce à la méthode d'usinage du bâti décrite ci-dessus, qui garantit un déplacement rigoureusement parallèle du coulisseau 5 par rapport au bâti 1, on peut ainsi assurer un déplacement du capteur 4 dans un plan parallèle au plan de la règle.

La longueur maximale de l'ensemble vis-colonnette dépend des tolérances utilisées pour la fabrication du bâti et du coulisseau, qui influencent directement la valeur maximale des corrections de distance ou de parallélisme à appliquer. Par exemple, si le capteur 4 a une longueur de quelques centimètres, par exemple 6 cm, des colonnettes 70 d'une longueur totale comprise entre quelques millimètres et quelques centimètres, par exemple 8 mm, permettant de corriger des imprécisions jusqu'à quelques millimètres, peuvent généralement être utilisées. Ces ordres de grandeur donnés à titre d'exemple sont valables avec les tolérances de fabrication utilisées habituellement pour ce genre de dispositifs de mesure, appliquées à l'exemple de réalisation illustré par les figures. Le filetage à l'intérieur de la colonnette peut par exemple être un filetage M3 ou un autre filetage suffisamment fin pour permettre un ajustement précis des moyens de mesure. La colonnette peut par exemple être réalisée en acier inox, tandis que le support de capteur 3 est de préférence réalisé en aluminium ou en une autre matière apte à être travaillée par des opérations de découpage, de pliage ou d'injection métallique ou plastique. Le support de capteur permet essentiellement de simplifier la construction du capteur lui-même, constitué d'un circuit imprimé difficile à usiner pour lui donner une forme complexe.

Nous allons maintenant décrire la méthode d'ajustage du parallélisme et de la distance entre le capteur 4 et la règle 2 selon l'invention.

Pour effectuer ce réglage, on introduit dans l'espace entre le capteur et la règle une cale d'épaisseur étalonnée, correspondant à la distance de fonctionnement optimale du capteur. On pourrait aussi introduire plusieurs cales étalonnées, par exemple une cale près de chaque colonnette 70. Au moyen des vis 72, on modifie la position et l'orientation des moyens de détection 3,4 jusqu'à ce que l'on perçoive en chaque point d'assemblage un léger pincement de la ou des cales d'épaisseur. A ce moment, le réglage est terminé. Pour prévenir un risque de dévissage, on peut introduire une goutte de colle 75 entre les vis et les colonnettes, l'ensemble devant toutefois de préférence rester facilement démontable au moyen des vis.

Bien que la description ci-dessus ait visé un mode de réalisation préférentiel de l'invention, nous allons maintenant discuter d'autres modes non illustrés de réalisation de l'invention.

Pour effectuer un réglage de parallélisme entre le plan du capteur 4 et celui de la règle 2, au moins trois points d'assemblage 7,8,9 sont nécessaires. Toutefois, plus de trois points d'assemblage peuvent être prévus afin de stabiliser le capteur 4, au prix toutefois d'un réglage plus compliqué des vis d'assemblage. Il est également possible de prévoir seulement deux points d'assemblage du type précité, comprenant chacun un ensemble vis-colonnette 72-70, et un ou plusieurs points d'assemblage d'un type simplifié, ne permettant pas de varier la distance d entre le support de capteur et le coulisseau, mais laissant toutefois une certaine liberté d'articulation entre ces éléments. Ces points d'assemblage simplifiés peuvent par exemple être constitués d'un ressort, d'un pivot ou d'un élément de charnière. Cette disposition permet toutefois seulement de régler le parallélisme entre le capteur et la règle, mais pas la distance. Elle convient donc pour des types de capteur moins sensibles à des imprécisions de distance.

Dans une variante, le support de capteur 3 ne comporte qu'un seul empattement périphérique, au lieu d'un empattement pour chaque point d'assemblage. L'ouverture 51 est dans cette variante complètement couverte par un seul empattement s'étendant sur tout le pourtour de l'embase plane 34 du support de capteur.

D'autres configurations différentes du coulisseau 5 et/ou des moyens de détection 3, 4 sont possibles, qui permettent aussi en agissant sur les moyens d'assemblage de modifier le plan défini par le capteur 4. Les moyens de détection pourraient par exemple être assemblés depuis l'autre côté du coulisseau 5, face au bâti 1, plutôt que depuis le côté externe du coulisseau. Dans cette configuration, le support de capteur 3 n'a pas d'empattements, et l'ouverture 51 dans le coulisseau n'est plus nécessaire. Dans une variante, on renonce totalement au support de capteur; le capteur est alors directement fixé au coulisseau à l'aide de moyens d'assemblage 7, 8, 9 similaires à ceux décrits ci-dessus.

## Revendications

1. Dispositif de mesure de longueur comprenant :
un bâti (1),
une règle (2) fixée sur ledit bâti (1),
un coulisseau (5) pouvant coulisser le long dudit bâti,
des moyens de détection (3, 4) comprenant un capteur (4) placé en regard de la règle et permettant en collaboration avec elle de déterminer au moins une coordonnée d'un point lié au coulisseau dans un système de coordonnées lié au bâti, les moyens de détection étant fixés au coulisseau en au moins trois points par des moyens d'assemblage (7, 8, 9),
caractérisé en ce que lesdits moyens d'assemblage comprennent en au moins un desdits points une vis ou une pièce filetée équivalente (72) engagée dans une ouverture (73) au moins partiellement filetée et au moins un ressort (71), une action en chacun desdits points sur la vis permettant de modifier l'écartement (d) entre les moyens de détection (3, 4) et le coulisseau (5), le ressort maintenant cet écartement aussi grand que l'engagement de la vis (72) dans ladite ouverture le permet, de manière à pouvoir ajuster le parallélisme et/ou la distance entre le capteur et la règle.

2. Dispositif selon la revendication 1, caractérisé en ce que les moyens de détection comprennent en outre un support de capteur (3) auquel est fixé solidairement le capteur (4), ledit support de capteur étant lui-même fixé au coulisseau (5) par lesdits moyens d'assemblage (7, 8, 9).

3. Dispositif selon la revendication précédente, caractérisé en ce que le support de capteur comprend une embase (34) à laquelle est fixé le capteur (4), et au moins un empattement (31, 32, 33) permettant la fixation au coulisseau (5), ladite embase étant logée dans une ouverture (51) au travers du coulisseau, le ou lesdits empattements s'étendant hors de l'ouverture en surplomb du coulisseau, à une distance (d) réglable à l'aide desdits moyens d'assemblage (7, 8, 9).

4. Dispositif selon l'une des revendications précédentes, caractérisé en ce que lesdits moyens d'assemblage en au moins un desdits points comprennent en outre une colonnette (70) percée en son centre par ladite ouverture (73) filetée sur au moins une partie de sa longueur, l'ensemble vis-colonnette (72-70) étant entouré par ledit ressort (71), ledit ensemble vis-colonnette traversant le coulisseau et les moyens de détection (3, 4), de manière à ce qu'il soit possible en agissant sur ladite vis de modifier l'écartement (d) entre le coulisseau et la partie (31, 32, 33) des moyens de détection (3, 4) traversée par ledit ensemble.

5. Dispositif selon l'une des revendications précédentes, caractérisé en ce que le coulisseau comporte des galets (52, 53, 54) permettant de le faire coulisser le long du bâti (1), une partie au moins des galets (52) roulant sur des surfaces de guidage (11, 13) appartenant au même plan que la surface (12) du bâti à laquelle est fixée la règle (2).

6. Dispositif selon l'une des revendications précédentes, caractérisé en ce que les moyens de détection (3, 4) sont liés au coulisseau par les moyens d'assemblage (7, 8, 9) en trois points.

7. Méthode d'ajustage d'un dispositif de mesure de longueur selon la revendication 1, caractérisée en ce qu'elle comprend les opérations suivantes:
- introduction d'au moins un élément permettant d'effectuer une comparaison de la distance entre la règle (2) et les moyens de détection (3, 4) avec une ou des distances étalonnées;
- réglage au moyen desdites vis (72) du positionnement et de l'orientation des moyens de détection, jusqu'à ce que la distance en chacun desdits points corresponde à la distance étalonnée, lesdits ressorts (71) prévus en chacun desdits points permettant de maintenir le positionnement des moyens de détection après le réglage.

8. Méthode selon la revendication précédente, caractérisée en ce que ledit élément de comparaison consiste en une cale d'épaisseur introduite entre la règle (2) et les moyens de détection (4).

## Patentansprüche

1. Vorrichtung zur Längenmessung mit einem Gestell (1), einem Massstab (2), der auf dem genannten Gestell (1) befestigt ist, einem Schlitten (5), der entlang dem genannten Gestell gleiten kann, Mittel zum Erfassen (3, 4), umfassend einen Messfühler (4), der gegenüberliegend der Schiene angeordnet ist, und in Zusammenarbeit mit dieser erlaubt, mindestens eine Koordinate eines mit dem Schlitten verbundenen Punktes in einem System von mit dem Gestell verbundenen Koordinaten zu bestimmen, wobei die Mittel zum Erfassen am Schlitten in mindestens drei Punkten durch Montagemittel (7, 8, 9) befestigt sind, dadurch gekennzeichnet, dass die genannten Montagemittel mindestens an einem der genannten Punkte eine Schraube oder einen äquivalenten gewindeten Teil (72) umfassen, der in eine mindestens teilweise gewindete Öffnung (73) eingreift und mindestens eine Feder (71), wobei eine Einwirkung jeder der genannten Punkte auf die Schraube die Änderung des Abstandes (d) zwischen den Mitteln zum Erfassen (3, 4) und dem Schlitten (5) erlaubt, und die Feder diesen Abstand so gross hält, wie der Eingriff der Schraube (72) in die genannte Öffnung es erlaubt, um die Parallelität und/oder die Distanz zwischen dem Aufnehmer und der Schiene justieren zu können.

2. Vorrichtung nach Patentanspruch 1, dadurch gekennzeichnet, dass die Mittel zur Erfassung im weiteren einen Aufnehmerträger (3) umfassen, an welchem der Messfühler (4) integral befestigt ist, wobei der genannte Aufnehmerträger selbst am Schlitten (5) durch die genannten Montagemittel (7, 8, 9) befestigt ist.

3. Vorrichtung nach dem vorangehenden Patentanspruch, dadurch gekennzeichnet, dass der Aufnehmerträger eine Befestigungsplatte (34) umfasst, an welcher der Messfühler (4) befestigt ist, und mindestens einem Stützfuss (31, 32, 33), welcher die Befestigung am Schlitten (5) erlaubt, wobei die genannte Befestigungsfläche in einer Öffnung (51) quer durch den Schlitten gelagert ist, und der oder die Stützfüsse sich ausserhalb der Öffnung vorstehend dem Schlitten mit einer Distanz (d) erstrecken, die mit Hilfe der genannten Montagemittel (7, 8, 9) regulierbar ist.

4. Vorrichtung nach einem der vorangehenden Patentansprüche, dadurch gekennzeichnet, dass die genannten Montagemittel in mindestens einem der genannten Punkte weiterhin eine Säule (70) umfassen, die in ihrem Zentrum durch die genannte gewindete Öffnung (73) auf mindestens einem Teil Ihrer Länge durchbohrt ist, wobei die Gesamtheit Schraube/Säule (72-70) durch die genannte Feder (71) umgeben ist, und die genannte Gesamtheit Schraube/Säule den Schlitten und die Erfassungsmittel (3, 4) durchquert, derart, dass es möglich ist, unter Einwirken auf die genannte Schraube den Abstand (d) zwischen dem Schlitten und dem Teil (31, 32, 33) der Erfassungsmittel (3, 4), die durch die Gesamtheit durchquert werden, zu modifizieren.

5. Vorrichtung nach einem der vorangehenden Patentansprüche, dadurch gekennzeichnet, dass der Schlitten Rollen (52, 53, 54) umfasst, welche erlauben, ihn entlang des Gestells (1) gleiten zu lassen, wobei mindestens ein Teil der Rollen (52) auf den Führungsflächen (11, 13) rollen, welche zur gleichen Ebene wie die Oberfläche (12) des Gestells gehören, an welchem der Massstab (2) befestigt ist.

6. Vorrichtung nach einem der vorangehenden Patentansprüche, dadurch gekennzeichnet, dass die Erfassungsmittel (3, 4) mit dem Schlitten durch die Montagemittel (7, 8, 9) an drei Punkten verbunden sind.

7. Verfahren zur Einstellung einer Vorrichtung zur Längenmessung nach Patentanspruch 1, dadurch gekennzeichnet, dass es die folgenden Operationen umfasst:
- Einführen mindestens eines Elementes, welches erlaubt, einen Vergleich der Distanz zwischen dem Massstab (2) und den Mitteln zur Erfassung (3, 4) mit einer oder mehreren geeichten Distanzen durchzuführen;
- Einstellung mit Hilfe der genannten Schraube (72), zur Positionierung und Orientierung der Mittel zur Erfassung, bis dass die Distanz in jedem dieser Punkte der geeichten Distanz entspricht, wobei die genannten Federn (71), die an jedem der genannten Punkte vorgesehen sind, erlauben, die Positionierung der Mittel der Erfassung nach der Regulierung aufrecht zu erhalten.

8. Verfahren nach dem vorangehenden Patentanspruch, dadurch gekennzeichnet, dass das genannte Vergleichselement aus einer Unterlagsplatte besteht, welche zwischen den Massstab (2) und die Mittel zur Erfassung (4) eingeführt ist.

## Claims

1. Linear measuring device comprising:
a supporting structure (1),
a scale (2) fixed to said supporting structure (1),
a slide (5) able to slide along said supporting structure,
detection means (3, 4) comprising a transducer (4) placed facing the scale and permitting in co-operation therewith to determine at least one co-ordinate of a point associated with the slide in a system of co-ordinates associated with the supporting structure, the means of detection being fixed to the slide at at least three points by mounting means (7, 8, 9),
characterised in that the said mounting means include at at least one of the said points a screw or an equivalent threaded piece (72) engaged in an opening (73) at least partially threaded and at least one spring (71), an action at each of the said points on the screw permitting change of the spacing (d) between the detection means (3, 4) and the slide (5), the spring keeping this spacing as large as the engagement of the screw (72) in the said opening permits, in a way to be able to adjust the parallelism and/or the distance between the transducer and the scale.

2. Device according to claim 1, characterised in that the detection means further comprise a transducer support (3) on which the transducer (4) is integrally fixed, the said transducer support being itself fixed to the slide (5) by means of the said mounting means (7, 8, 9).

3. Device according to the preceding claim, characterised in that the transducer support comprises a base plate (34) to which the transducer (4) is fastened, and at least one footing (31, 32, 33) permitting fastening to the slide (5), the said base plate being accommodated in an opening (51) through the slide, the said footing or footings extending out of the opening overhanging the slide, at a distance (d) adjustable with the aid of the said mounting means (7, 8, 9).

4. Device according to one of the preceding claims, characterised in that the said mounting means at at least one of the said points further comprise a column (70) pierced at its centre by the said threaded opening (73) on at least one part of its length, the screw-column assembly (72-70) being surrounded by the said spring (71), the said screw-column assembly passing through the slide and the detection means (3, 4) in such a way that it is possible by acting upon the said screw to change the spacing (d) between the slide and the part (31, 32, 33) of the detection means (3, 4) passed through by the said assembly.

5. Device according to one of the preceding claims, characterised in that the slide includes rollers (52, 53, 54) permitting it to slide along the supporting structure (1), at least part of the rollers (52) rolling on guide surfaces (11,13) belonging to the same plane as the surface (12) of the supporting structure to which the scale (2) is fastened.

6. Device according to one of the preceding claims, characterised in that the detection means (3, 4) are connected to the slide by mounting means (7, 8, 9) at three points.

7. Method of adjusting a linear measuring device according to claim 1, characterised in that it comprises the following operations:
- introduction of at least one element permitting a comparison to be made of the distance between the scale (2) and the detection means (3, 4) with one or more calibrated distances;
- adjustment by means of said screws (72)of positioning and orientation of detection means until the distance at each of the said points corresponds to the calibrated distance, the said springs (71) provided at each of the said points permitting the positioning of detection means to be maintained after the adjustment.

8. Method according to the preceding claim, characterised in that the said element of comparison is a shim introduced between the scale (2) and the detection means (4).
